(19) Europäisches Patentamt
European Patent Office
Office européen des brevets

(11) **EP 3 152 540 B1**

(12) **EUROPEAN PATENT SPECIFICATION**

(45) Date of publication and mention of the grant of the patent:
**22.05.2019 Bulletin 2019/21**

(51) Int Cl.:
***G01L 1/24*** *(2006.01)*   ***G01L 1/00*** *(2006.01)*
***B25J 13/08*** *(2006.01)*

(21) Application number: **15802362.2**

(22) Date of filing: **02.06.2015**

(86) International application number:
**PCT/JP2015/002802**

(87) International publication number:
**WO 2015/186356 (10.12.2015 Gazette 2015/49)**

(54) **SYSTEM AND METHOD FOR OBTAINING FORCE BASED ON PHOTOELASTICITY**

SYSTEM UND VERFAHREN ZUR ERLANGUNG VON KRAFT AUF GRUNDLAGE VON PHOTOELASTIZITÄT

SYSTÈME ET PROCÉDÉ D'OBTENTION DE FORCE SUR LA BASE DE LA PHOTOÉLASTICITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.06.2014 US 201462007082 P**

(43) Date of publication of application:
**12.04.2017 Bulletin 2017/15**

(73) Proprietor: **Okinawa Institute of Science and Technology
School Corporation
Kunigami-gun, Okinawa 904-0495 (JP)**

(72) Inventors:
• **BANDI, Mahesh Maruthi
Kunigami-gun
Okinawa 904-0495 (JP)**
• **VENKADESAN, Madhusudhan
Bangalore 560065 (IN)**
• **MANDRE, Shreyas Dilip
Providence, RI 02912 (US)**

(74) Representative: **Haseltine Lake LLP
Lincoln House, 5th Floor
300 High Holborn
London WC1V 7JH (GB)**

(56) References cited:
JP-A- H10 122 993    JP-U- H0 283 438
US-A- 3 950 987    US-A- 3 966 326
US-A- 5 298 964    US-A- 5 298 964

• DRISCOLL H ET AL: "The use of photoelasticity to identify surface shear stresses during running", PROCEDIA ENGINEERING, ELSEVIER, AMSTERDAM, NL, vol. 2, no. 2, 1 June 2010 (2010-06-01), pages 3047-3052, XP027184649, ISSN: 1877-7058 [retrieved on 2010-06-01]
• DUBEY V N ET AL: "Load estimation from photoelastic fringe patterns under combined normal and shear forces", JOURNAL OF PHYSICS: CONFERENCE SERIES, INSTITUTE OF PHYSICS PUBLISHING, BRISTOL, GB, vol. 181, no. 1, 1 August 2009 (2009-08-01), page 12074, XP020162853, ISSN: 1742-6596
• SAAD R E ET AL: "Distributed-force recovery for a planar photoelastic tactile sensor", INSTRUMENTATION AND MEASUREMENT TECHNOLOGY CONFERENCE, 1995. IMTC/95. PROCEEDINGS. INTEGRATING INTELLIGENT INSTRUMENTATION AND CONTROL., IEEE, IEEE, 24 April 1995 (1995-04-24), page 532, XP032263183, DOI: 10.1109/IMTC.1995.515374 ISBN: 978-0-7803-2615-6
• WIJERATHNE ET AL: "Stress field tomography based on 3D photoelasticity", JOURNAL OF THE MECHANICS AND PHYSICS OF SOLIDS, PERGAMON PRESS, OXFORD, GB, vol. 56, no. 3, 18 February 2008 (2008-02-18), pages 1065-1085, XP022489299, ISSN: 0022-5096, DOI: 10.1016/J.JMPS.2007.06.004

EP 3 152 540 B1

- YALAVARTHY PHANEENDRA ET AL: "Implementation of a computationally efficient least-squares algorithm for highly under-determined three-dimensional diffuse optical tomography problems", MEDICAL PHYSICS, AIP, MELVILLE, NY, US, vol. 35, no. 5, 8 April 2008 (2008-04-08), pages 1682-1697, XP012116029, ISSN: 0094-2405, DOI: 10.1118/1.2889778

**Description**

[Technical Field]

The present invention relates to a system and method for obtaining force exerted on a surface based on photoelasticity.

[Background Art]

Two objects making physical contact exert forces on each other based on Newton's third law, which states that the force from the second object to the first object is equal in magnitude and opposite to the direction of the force from the first object to the second object. A foot, a finger or other body part of a human or any object moving on a surface of a material generates a force field that varies in space and time. Techniques to measure such force fields, in particular contact pressure distribution, have been proposed for a wide variety of industrial applications. For example, in tactile sensing of robotics, the measured tactile softness or hardness can be used for simulating touch sensations for designing feedback reactions of a robot such as grasping and manipulation. In the field of gaming, the sensed motion of a user based on the measured force can be used to simulate the virtual participation of the user in the game. The interaction between a foot and a surface on which the athlete is running is widely investigated to improve the athlete's performance as well to limit the risk of injury. Measurement results may be utilized for designing high-quality athletic shoes and field turfs. The interaction parameters typically measured during such a foot-strike are normal and tangential forces. Information pertaining to force exerting on a foot, a hand or other body part may be used for diagnostics and treatment methods in physiotherapy and related healthcare, therapeutic evaluation of neurological development of an infant, and various other medical applications. Additionally, measurements of spatial and temporal variation of force between a tire and a surface can be incorporated in vehicle performance testing, for example, in automobile and/or airline industries.

Although the existence of force and reaction force is fundamental in nature, it has been difficult to obtain spatial and temporal variation of all three components of force. A photoelastic method to simultaneously obtain vertical (normal) and shear (tangential) forces has been non-existent to date. See, for example, Driscoll et al. (NPL 4), which describes that: "The extraction of load information, both shear and vertical, was investigated by Dubey et al. (NPL10, 11, 5). Neural networks were employed to interpret a photoelastic foot print image but it was deduced that considerable manual analysis would also be required to evaluate the image (NPL11). Mechanical methods of measuring shear stresses have more recently been investigated. Davis et al. (NPL6) designed a device to simultaneously measure the vertical pressure and the shearing forces in the anterior-posterior and medial-lateral directions under the plantar surface of the foot. The results were able to identify areas of maximum shear and maximum pressure within the forefoot and validated well against force-plate measurements. However, the device had a relatively low sampling frequency and a small test area; the combination of which restricts the range of movements that can be performed on the device."

In view of ever increasing needs for accurate measurement of force between two objects as encountered in robotics, athletics, therapeutics, automotive and various other advanced industries, a new technique is desired for obtaining reliable information on the force field when two objects are dynamically interacting with each other.

PL2 discloses a stress sensor having directional measurement capabilities based on the photoelastic effect in isotropic photoelastic materials. Directional measurement capability is achieved in the sensor by the incorporation of three different optical axes passing through the photoelastic element. This creates three independent stress sensors which utilize a single sensing element. Each of the three independent stress sensors are sensitive to applied stress in different directions. The response of each of the sensors is analyzed and the magnitude and direction of incoming stress is determined. The use of a sum-difference output detection scheme results in immunity to light source intensity variations, optical fiber microbending losses, and fiberoptic connector losses.

PL3 discloses a piezo-optic measuring transducer comprising a light source, a first polarization-optical channel with a first portion of a luminous flux produced by the light source passing therethrough and incident upon a first polarizer, a second polarization-optical channel with a second portion of the luminous flux produced by the light source passing therethrough and incident upon a second polarizer, an elastic element sensitive to a stress variation therein caused by a variation in the measurand and forming part of both polarization-optical channels, and first and second photocells arranged to convert the light incident thereupon into respective electrical signals, the difference in the electrical signals at the outputs of the first and second photocells being representative of the measurand.

[Citation List]

[Non Patent Literature]

NPL1: Michael B. Giles et al., An introduction to the adjoint approach to design. Oxford University Computing Laboratory, Numerical Analysis Group, Report no. 00/04 (2000).

NPL2: Leon Ainola et al., On the generalized Wertheim law in integrated photoelasticity. J. Opt. Soc. Am. A, Vol. 25, No. 8, 1843-1849 (2008).

NPL3: M. Arcan et al., A fundamental characteristic of the human body and foot, the foot-ground pressure pattern. J. Biomechanics, Vol. 9, 453-457 (1976).

NPL4: Heather Driscoll et al., The use of photoelasticity to identify surface shear stresses during running. Procedia Engineering 2, 3047-3052 (2010).

NPL5: Venketesh N. Dubey et al., Load estimation from photoelastic fringe patterns under combined normal and shear forces. Journal of Physics, Conference Series 181, 1-8 (2009).

NPL6: Brian L. Davis et al., A device for simultaneous measurement of pressure and shear force distribution on the planar surface of the foot. Journal of Applied Biomechanics, Vol. 14, 93-104 (1998).

NPL7: Ricardo E. Saad et al., Distributed-force Recovery for a planar photoelastic tactile sensor. IEEE Transactions on Instrumentation and Measurement, Vol. 45, No. 2, 541-546 (1996).

NPL8: Taku Nakamura et al., Journal of Robotics and Mechatronics, Vol. 25, No. 2, 355-363 (2013).

NPL9: J. Cobb et al., Transducers for foot pressure measurement: survey of recent developments. Med. & Biol. Eng. & Comput., 33, 525-532 (1995).

NPL10: Venketesh N. Dubey et al., Extraction of load information from photoelastic images using neural networks. Proceedings of IDETC/CIE 2006, DETC2006-99067 (2006).

NPL11: Venketesh N. Dubey et al., Photoelastic stress analysis under unconventional loading. Proceedings of IDETC/CIE 2007, DETC2007-34966 (2007).

NPL12: Anthony Rhodes et al., High resolution analysis of ground foot reaction forces. Foot & Ankle, Vol. 9, No. 3, 135-138 (1988).

NPL13: Ian J. Alexander et al., The assessment of dynamic foot-to-ground contact forces and plantar pressure distribution: A review of the evolution of current techniques and clinical applications. Foot & Ankle, Vol. 11, No. 3, 152-167 (1990).

NPL14: Yoshiki Nishizawa et al., Contact pressure distribution features in Down syndrome infants in supine and prone positions, analyzed by photoelastic methods. Pediatrics International Vol. 48, 484-488 (2006).

[Patent Literature]

PL1: Brull et al., Method and apparatus for indicating or measuring contact distribution over surface. US 3,966,326, issued June 29, 1976.

PL2: Nelson et al., Optical stress sensing system with directional measurement capabilities. US 5298964, issued March 29, 1994.

PL3: Slezinger et al., Piezo-optic measuring transducer and accelerometer, pressure gauge, dynamometer, and thermometer based thereon. US3950987, issued April 20, 1976.

[Summary]

The present invention is defined in independent claims 1 and 2, to which reference should now be made. Optional embodiments are defined in the dependent claims.

[Brief Description of Drawings]

FIG. 1A illustrates a side view of an example of measurement setup which does not embody the invention, wherein force is applied by a human finger to a photoelastic block of a cuboid shape.

FIG. 1B illustrates a top view of the example of Fig. 1A, wherein force is applied by a human finger to a photoelastic block of a cuboid shape.

FIG. 2 illustrates an example of measurement setup according to an embodiment of the invention, wherein force is applied by a human foot to a photoelastic block of a polyhedron shape.

FIG. 3 is a flowchart illustrating the deconvolution process based on the optimization method to obtain the force using the measured photoelastic intensities.

[Description of Embodiments]

In view of ever increasing needs for accurate measurement of force between two objects as encountered in robotics, athletics, therapeutics, automotive and various other advanced industries, this document describes a new method for reliably and dynamically obtaining all three components of the force, and hence the reaction force, based on photoelasticity. Photoelasticity has been conventionally used for experimental stress analysis. Birefringence is a property of certain transparent materials where a ray of light passing through the material has two refractive indices depending on the state of polarization of the light. Photoelastic materials exhibit birefringence, or double refraction, by application of stress, and the magnitude of refractive indices at each point in the material is directly related to the state of stress at that point. The light ray passing through the material changes its polarization due to the birefringence property. Since the amount of birefringence depends on a given stress, the stress distribution within the photoelastic material can be measured by observing the light polarization. In general, the setup for observing photoelasticity is called a polariscope system, in which the sample is placed between two polarizers, with a light source on one side and a camera on the other side. In case a white light source is used, a specific pattern of colored bands can be observed in the sample, which is directly related to the internal stress of the sample.

An object such as a foot, a finger or other body part of a human or an automobile tire moving on a photoelastic material is considered to obtain the reaction force exerted from the material to the object by using photoelastic response of the material, hence the force exerted vice-versa. The state of polarization of light can be manipulated to probe the deformation of the photoelastic material in response to the force exerted by the object, which is of course directly opposite in direction to the reaction force exerted from the material to the object. Details of the present method and setup for the photoelastic measurements are described below with reference to the accompanying drawings.

Consider a ray of light propagating through the material in the direction x. The polarization state of the light can be decomposed into the perpendicular directions $y$ and $z$ as:

$$\boldsymbol{E} = (Ey\ \boldsymbol{y} + Ez\ \boldsymbol{z}), \qquad\qquad \text{Eq. (1)}$$

where y and z are chosen to lie along the principal components of strain in the plane perpendicular to the x direction, and Ey and Ez are the respective components of the electric field. The speed of propagation depends on the magnitude of the principal components of strain in the two directions, and thus the relative phase of electromagnetic oscillations is altered proportional to the difference of the principal strain components. Typically, the strain field varies over a length scale much larger than the wavelength of light, and the refractive index tensor can be approximated by the components of the isotropic part. Thus, one can employ a multiple length-scale approximation expressed as:

$$E(\xi,\ x) = E_0(\xi,\ x) + E_1(\xi,\ x) + \dots, \text{Eq. (2)}$$

where x = | x | and $\xi$ = x $\omega$ /c with $\omega$ being the electromagnetic oscillation frequency and c being the speed of light in vacuum. The relative phase of electromagnetic oscillations is altered proportional to the difference of the principal strain components, and this relationship to leading order gives:

$$E_0(\xi,\ x) = A(x) \exp (i\xi), \text{Eq. (3)}$$

where A(x) models the change in polarization state over the length scale of the strain. The solvability condition for the relationship to next order gives:

$$\frac{dA}{dx} = -iK\left(\boldsymbol{\epsilon} - \frac{trace\ (\epsilon)}{2}\ \tilde{I}\right)\boldsymbol{A}(x),\ \text{Eq. (4)}$$

where K is the photoelastic strain constant, and $\varepsilon$ is the strain tensor. This equation is known to those with ordinary skill in the art as the equation of integrated photoelasticity, and has been applied to the field of photoelastic strain tomography. Starting with a given incident polarization, for example, Ain = [1, 0] for linear polarization and Ain = [1, i] for circular polarization, Eq. (4) can be integrated along the light path x, and the final polarization state can be determined for a given strain field along the light path. The final polarization is then projected onto a fixed polarization state p to obtain an emerging light intensity p • Aout. Using the propagator U of the integrated photoelastic equation Eq. (4), the polarization state Aout emerging from the material can be expressed as:

$$\text{Aout} = U \, \text{Ain}, \text{ Eq. (5)}$$

where U can be obtained by integrating Eq. (4) if the strain tensor $\varepsilon$ is known..

Consider a block of photoelastic material occupying a volume V with a surface S being exposed to the unknown force f(x,y) having three components $f_k$ (x,y), where k = x, y and z, to be determined. The stress in the material caused by the force can be expressed in the linear approximation as:

$$\sigma_{ij}(x,y,z) = \int_S G_{ijk}(x,y,z; \, x_0, y_0) f_k \, (x_0, \, y_0) dx_0 dy_0 , \text{Eq.} (6)$$

where $G_{ijk}$ denote the components of the Green's function between the force $f_k$ at $(x_0, y_0)$ and the components of the stress tensor $\sigma_{ij}$ at (x, y, z), and Einstein's summation convention is implied unless otherwise stated. The Green's function depends on the boundary conditions on the other faces of the photoelastic block and can be calculated using a numerical method such as the finite element method. The strain related to the stress through the elastic constitutive law for the photoelastic material is expressed as:

$$\sigma_{ij} = 2\mu\epsilon_{ij} + \lambda\delta_{ij}\epsilon_{kk}, \text{ Eq.} (7)$$

where $\varepsilon_{ij}$ are the components of the strain, $\mu$ and $\lambda$ are the Lame coefficients for the elastic solid, and Einstein's summation convention is used over repeated indices. Since the stress varies with location, the strain is also non-uniform, and thus each ray of light samples and integrates the strain state in its path. The integrated photoelastic equation Eq. (4) applied over an individual ray of light provides one scalar equation about the state of force at that instance of time, thus furnishing as many equations as the number of unknown force components by using as many polariscopes. Based on the relationships expressed in Eqs. (6) and (7), the strain can be written as a function of the force $\varepsilon$ [f (x, y)]. The integrated photoelastic equation Eq. (4) can then be solved for the propagator U, which is a function of $\varepsilon$, hence a function of f (x, y), and thus can be written as U[f (x, y)]. Uj [f (x, y)] denotes the propagator for the j-th polariscope, and the exit polarization state can be written in terms of the incident polarization as expressed in Eq. (5). Therefore, the measured photoelastic response Ij(x, y) corresponding to the projection on the polarization state p can be expressed as follows:

$$I_j \, (x, y) = \boldsymbol{p} \cdot \boldsymbol{U}_j [\boldsymbol{f}(x, y)] \boldsymbol{A}_{in} . \text{Eq.} (8)$$

Ij (x, y) is experimentally known and needs to be deconvolved to obtain f (x, y). The deconvolution technique may be used to solve for f (x, y) using the measured Ij (x, y). This constitute a nonlinear relation between f (x, y) and Ij (x, y) or the polariscope index j = 1, 2, 3. For computational simplicity, the surface may be discretized into small elements, over each of which the force is assumed to be constant. Similarly, the volume of the block may be discretized in small elements, in each of which the strain tensor is assumed to be constant.

The photoelastic response depends on the off-diagonal part of the strain tensor, and the interferometry requires projecting the two components of polarization vector on a common direction. Accordingly, only one combination of the six independent 3-D components can be probed through photoelasticity, and in many cases this combination is unknown. Furthermore, if the strain is not uniform along the direction of the light ray, the photoelastic response is sampled and aggregated by the ray, and thus tomographic techniques may be needed to deconvolve the strain as a function of position. Due to these limitations, conventional photoelastic measurements have been cumbersome and limited in scope.

The objective of performing the present photoelastic measurement is to obtain three components of the force exerted by an object in contact with, and moving on the surface of a photoelastic material. Measurements are made to detect the integrated photoelastic response of the material by using polarized light rays propagating through the material being subjected to inhomogeneous stress. A mathematical and computational deconvolution process is needed to deconvolve the measured photoelastic intensities to obtain all the force components. Consider a block of photoelastic material having multiple planar surfaces for constructing at least three independent polariscopes. The block experiences a time-dependent force f (x, t), where t denotes time and x denotes the two-dimensional coordinates of the location on the surface where the object is moving to exert the force f. This results in a time-dependent, anisotropic, and non-uniform stress field $\sigma$ in the photoelastic block. The stress field $\sigma$ satisfies the following linearized incompressible elasticity equations:

$$\nabla \cdot \boldsymbol{\sigma} = 0, \quad \boldsymbol{\sigma} = -p\tilde{I} + \mu\boldsymbol{\epsilon}, \quad \boldsymbol{\epsilon} = \left(\nabla \boldsymbol{u} + \nabla \boldsymbol{u^T}\right), \text{Eq.} (9)$$

where u (x, t) is the incompressible displacement field at the locations in the block (Vu = 0), p is the pressure, ε is the strain, and
$\tilde{I}$
is the identity tensor. The elasticity problem to be solved is subject to the boundary conditions σ • n = f on the surface where the object is moving, and either u = 0 on the bottom surface or σ • n = 0 on the free surface.

A necessary condition for uniquely determining the three components is that there be at least three photoelastic measurements. Independence of three polariscopes implies that the light rays from different polariscopes sample a common region of space near the region of interest but in different directions. Using Eq. (4), the polarization state of the ray from the k-th polariscope (k = 1, 2 and 3 denoting the three polariscopes, respectively) is expressed as:

$$\frac{dA_k}{ds_k} = -iK\left(\boldsymbol{\epsilon} - \frac{trace\,(\epsilon)}{2}\tilde{I}\right)\boldsymbol{A}_k, \text{Eq.} (10)$$

where K is the photoelastic strain constant, $s_k$ is the length along the direction of the ray, ε is the strain, and there in no summation over k. The three optical detection devices such as cameras in the three polariscopes measure the two-dimensional grayscale intensity emanating from the polariscopes, referred to as measured photoelastic intensities J = $(J_1, J_2, J_3)$, respectively. As explained earlier with reference to Eq. (8), if the force f is known, the photoelasticity equations, Eqs. (9) and (10), can be solved to predict the polariscope image intensity fields, which are referred to as predicted photoelastic intensities $\boldsymbol{I} = (I_1, I_2, I_3)$ corresponding respectively to the $\boldsymbol{J} = (J_1, J_2, J_3)$, where $I_k = \boldsymbol{p} \cdot \boldsymbol{A}_k$ is the projection of $\boldsymbol{A}_k$ on the polarization state $\boldsymbol{p}$. This process is referred to as the forward problem solving in this document. In continuum theory, each of the above variables is a continuous function of two- or three-dimensional spatial coordinates and time. For experimental purposes, a discrete representation of these variables is considered. Thus, each continuous operation (integration, differentiation, etc.) is replaced with its discrete analog. Examples of setups for the present photoelastic measurements, each including three polariscopes, are explained below.

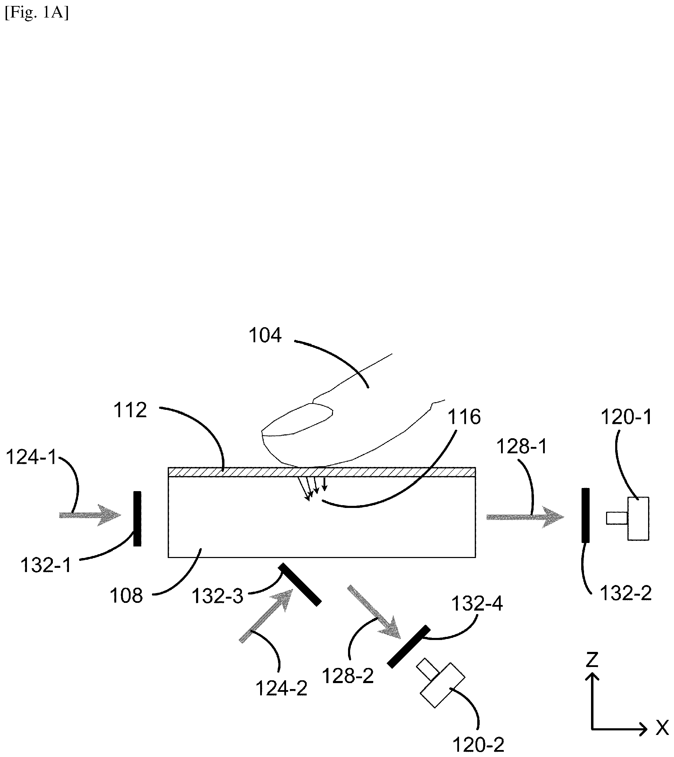

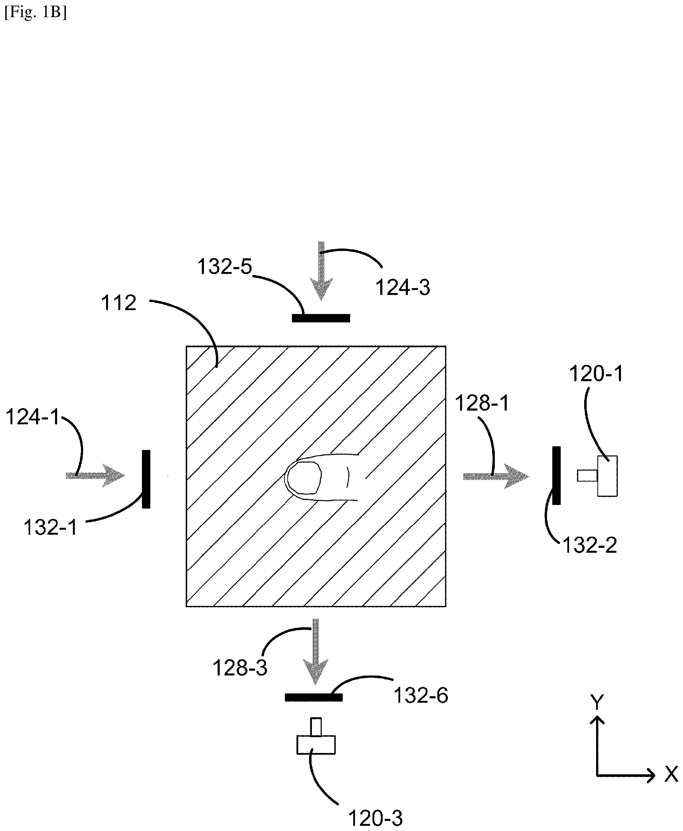

FIGS. 1A and 1B illustrate an example of measurement setup which does not embody the invention, wherein force is applied by a human finger to a photoelastic block of a cuboid shape. FIG. 1A is a side view looking toward the x-z plane, and FIG. 1B is a top view looking toward the x-y plane. This example shows a scenario when a finger 104 is pushing a photoelastic block 108 made of a photoelastic material having a reflective coating 112 thereon along the x-y plane, thereby generating a force field 116 in the photoelastic block 108. The force field 116 has spatial as well as temporal variations as indicated by the arrows. The present setup is configured to obtain the spatial and temporal variation of the force in all three directions. The number of locations where the force is to be measured may be determined by the area of the finger 104 touching the surface as well as by the desired resolution of the force field. The cross-sectional shape of the photoelastic block 108 with respect to the x-y plane may be a square or a rectangle. The thickness of the photoelastic block 108 as well as the thickness of the reflective coating 112 may be determined depending on the measurement effectiveness and desired accuracy.

The setup illustrated in FIGS. 1A and 1B includes three optical detection devices 120-1, 120-2 and 120-3 and three light sources (not shown) configured to emit three incident rays of light 124-1, 124-2 and 124-3. The corresponding outgoing rays of light are indicated by 128-1, 128-2 and 128-3, respectively. The outgoing light 128-1 is a transmitted part of the incident light 124-1 through the photoelastic block 108; the outgoing light 128-2 is a part of the incident light 124-2 that is reflected by the reflected coating 112 and transmitted through the photoelastic block 108; the outgoing light 128-3 is a transmitted part of the incident light 124-3 through the photoelastic block 108. The optical detection devices 120-1, 120-2 and 120-3 may be cameras or any other suitable devices capable of capturing the optical properties. A first polariscope is configured along the x-direction, including the light source for emitting the incident light 124-1, and a first circular polarizer 132-1 through which the incident light 124-1 goes through before entering the photoelastic block 108, a second circular polarizer 132-2 through which the outgoing light 128-1 goes through before being received by the optical detection device 120-1. A second polariscope is configured along the x-z plane, including the light source for emitting the incident light 124-2, and a third circular polarizer 132-3 through which the incident light 124-2 goes through before entering the photoelastic block 108, a fourth circular polarizer 132-4 through which the outgoing light 128-2 goes through before being received by the optical detection device 120-2. In this case, the light enters the block 108 through the bottom surface at an angle, transmits through the block 108, reflects off the top surface coated with the reflective material 112, transmits back through the block 108, and exits the block 108 through the bottom surface at an angle. A third polariscope is configured along the y-direction, including the light source for emitting the incident light 124-3, and a fifth circular polarizer 132-5 through which the incident light 124-3 goes through before entering the photoelastic block 108, a sixth circular polarizer 132-6 through which the outgoing light 128-3 goes through before being received by the optical detection device 120-3. In the present configuration, the first and third polariscopes operate in transmission mode, and the second polariscope operates in reflection mode.

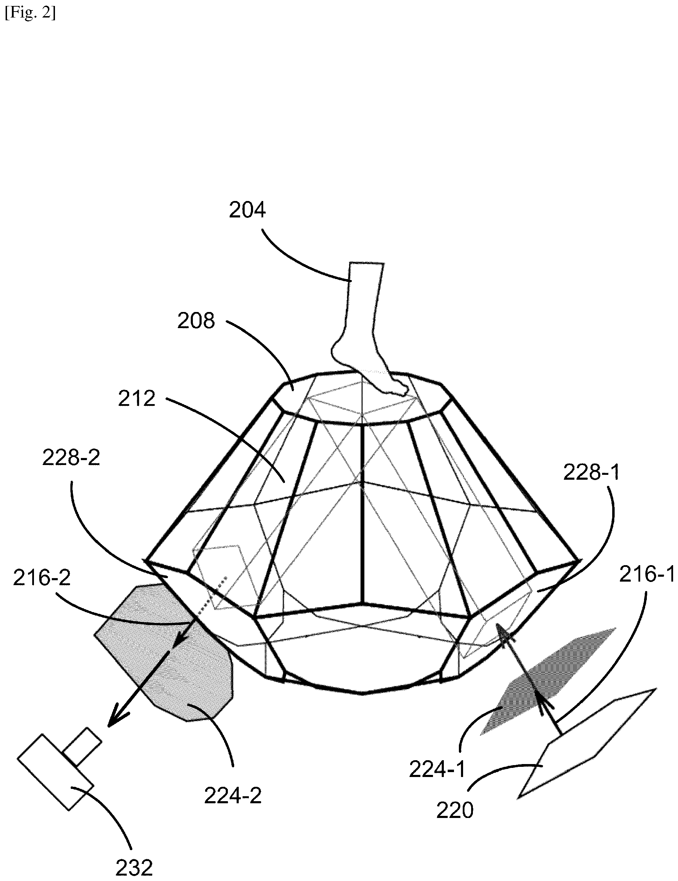

FIG. 2 illustrates an example of measurement setup according to an embodiment of the invention, wherein force is applied by a human foot to a photoelastic block of a polyhedron shape. The foot 204 is moving on the surface 208 of a photoelastic block 212, which has a shape of a faceted polyhedron. As in the previous example of FIGS. 1A and 1B, the top surface 208 of the photoelastic block 212 has a reflective coating (not shown). The polyhedral photoelastic block 212 has six basal facets in hexagonal arrangement, just like a cut diamond. Each of the polariscopes is configured so that the incident light enters through one facet, reflects off the top surface having the reflective coating, and exits the photoelastic block 212 through a diagonally opposite facet. These facets are oriented such that the light entering and exiting the block 212 is normal (perpendicular) to the photoelastic block 212.

The present setup using the polyhedral photoelastic block 212 includes three polariscopes, only one of which is illustrated in FIG. 2 for clarity. A light source 220 emits an incident light 216-1, which goes through a first circular polarizer 224-1 and enters the photoelastic block 212 through a first surface 228-1. The light transmits through the block 212, reflects off the top surface 208 coated with the reflective material, transmits back through the block 212, and exits the block 212 through a second surface 228-2. The outgoing light 216-2 goes through a second circular polarizer 224-2 before being received by an optical detection device 232, such as a camera. Similarly, two other polariscopes are configured, respectively, for two pairs of diagonally opposite basal facets. In the present configuration, all three polariscopes operate in reflection mode.

Each of the above setups is configured such that each ray of light samples the state of instantaneous strain along its path in the photoelastic block, and the optical retardation of the two polarization states is captured as interference fringes by the optical detection device. These measured optical information including photoelastic intensities are used as inputs to a deconvolution process to obtain the force due to the object moving on the surface. The next process in the present method is to deconvolve the measured photoelastic intensities to obtain the three components of the force field, which varies temporally and spatially. In the algorithm below, the measured photoelastic intensities are denoted as Jn, where n = 1, 2... and N, which is the n-th time frame when the n-th photoelastic intensities $J = (J_1, J_2, J_3)$ are measured by the three polariscopes k = 1, 2 and 3. Similarly, the predicted photoelastic intensities are denoted as In, where n = 1, 2... N and $I = (I_1, I_2, I_3)$ corresponding to $J = (J_1, J_2, J_3)$. Here, n = 1, 2,... and N is the frame index representing the sequence of time steps. The problem of determining the force f with the given Jn can be cast in the framework of optimization, wherein the task is reduced to obtaining the force f that renders the following quantity less than a certain threshold:

$$\int_A \|Jn - In\| \, dA, \ \text{Eq.} \, (11)$$

subject to the conditions expressed as Eqs. (9) and (10), which are collectively termed photoelasticity equations in this document. With the problem cast as an optimization problem, known optimization techniques can be used to obtain the force f. For example, Broyden-Fletcher-Goldfarb-Shanno (BFGS) algorithm, which is one of the well-known quasi-Newton methods, may be used. The BFGS algorithm, which falls in the category of the steepest descent method, incorporates gradient information to successively reduce the objective function value. The gradient to be used in the algorithm may be computed using an adjoint formulation of Eqs. (9) and (10). This process is referred to as the inverse problem solving in this document. The iterative process is carried out until the quantity expressed as Eq. (11) converges within a predetermined small value, and the corresponding f is determined to provide the three components of the force. In general, an iterative method requires an initial guess, and thus the force from the previous frame can be used as a guess for the deconvolution at the current frame. The number of locations where the force is to be obtained may be determined by the area of the object touching the surface as well as by the desired resolution of the force field. For example, a typical foot area is about $2.5 \times 10^4 \ mm^2$, and for a desired resolution of 5 mm, the number of locations where the force is to be measured is 3000.

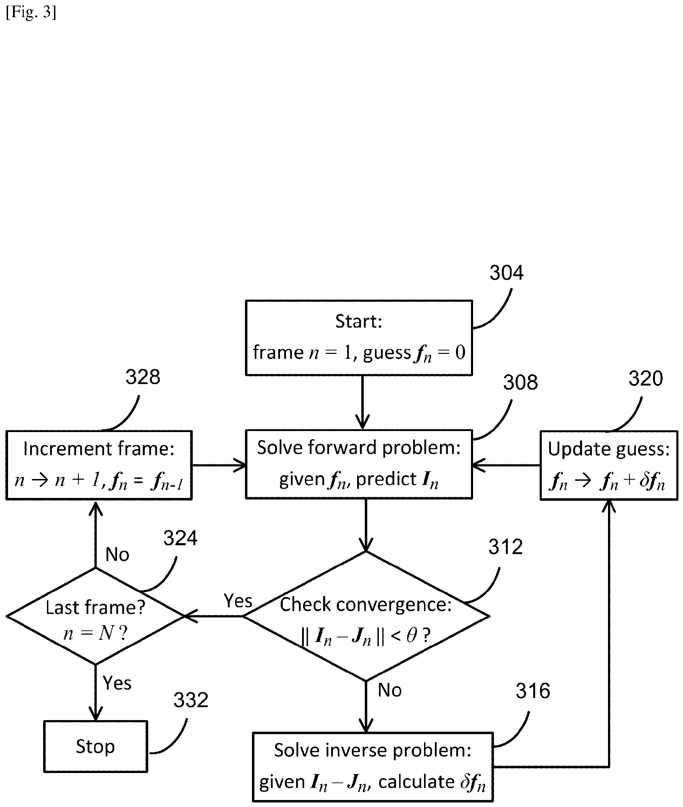

FIG. 3 is a flowchart illustrating the deconvolution process based on the optimization method to obtain the force using the measured photoelastic intensities. In step 304, the process is started by setting the first frame n = 1 and the initial guess fn = 0. In step 308, the forward problem is solved for the given fn to predict In. As explained earlier, in the forward problem solving, the photoelasticity equations, Eqs. (9) and (10), are solved to predict the photoelastic intensities I with the given force f. In step 312, the convergence is checked by comparing the quantity associated with the difference between the predicted and measured photoelastic intensities against a predetermined threshold θ. If it is not converged, the process proceeds to step 316, where the inverse problem is solved to obtain a force gradient δfn for the given ‖In - Jn‖. As explained earlier, in the inverse problem solving, the force gradient δfn is obtained in the steepest descent method subject to the photoelastic equations of Eqs. (9) and (10) for the purpose of successively reducing the objective function value ‖In-Jn‖. The force gradient δfn may be calculated using an adjoint formulation of the photoelasticity equations (9) and (10). In other words, δfn is the increment in the guess determined along the direction of the steepest decrease of ‖In - Jn‖ as a function of fn. In step 320, the input guess for fn is updated to fn + δfn. Thereafter, the process repeats the loop 308 - 320 until the value ‖In - Jn‖ converges to less than the predetermined threshold θ. The resultant fn is outputted as the force for the n-th frame. If it is judged in step 312 that the value converged, the frame is incremented to the next frame n + 1 in step 328, unless it has reached the final frame N in step 324. In step 328, the force from the previous frame is given as fn = fn-1, and the process repeats steps 308 and 312 until it reaches the final frame N in step 324, and then the process is stopped in step 332. Here, convergence is accelerated by using the force estimated from the previous frame as an initial guess for the next frame. It should be noted that if the object is stationary and the force does not change substantially as a function of time, the number of frames can be one, i.e., N = 1.

Conventional photoelastic methods include measurements of pressure distributions in tactile sensor applications. Such a conventional method assumes that the force has only one component across the surface for the pressure distribution measurement. In case this assumption is invalid, the other unmeasured components of the force contribute to the photoelastic response, and thus render the estimates inaccurate. In contrast, the present method is designed to estimate all three components of the applied force by using at least three independent polariscopes. The forward and inverse problems are solved to uniquely deconvolve the photoelastic response to obtain all three components.

Even if three independent polariscopes are used, it does not imply that the three components of the force vector field can be obtained. It is not as simple as making three independent ID measurements because the photoelastic intensity is a composite signal that contains information for all three force components. For example, if one is interested in measuring only the normal force component in a situation where all three force components (normal and tangential) are non-zero, it would be wrong to assume that a single polariscope will yield the normal force. This will lead to an erroneous measurement of the normal force. The difficulties underlying such deconvolution are highlighted by Driscoll et al. (NPL4), as quoted earlier in the "Background Art" section in this document. To date there is no mathematical method that can deconvolve these measurements into all three components of the applied force. According to an aspect of the present invention, a method and system are provided for obtaining three components of force by circumventing such difficulties.

The exception to the above applies when additional information about the force field is available from independent analyses or measurements. For example, if it is known that the force everywhere on the surface of the photoelastic block has fewer than three components, then fewer than three polariscopes may be employed for obtaining the fewer than three components. In such a case, the deconvolution method is modified to incorporate the available additional information and reduce the number of the polariscopes. The number of polariscopes is configured to be greater than or equal to the number of components of the force. However, it is also possible to have polariscopes fewer than the number of components of the force if additional information can be utilized to supplement the measurements. If such additional information about the force is available, e.g., showing the force has one or two components, the number of polariscopes may be one in conjunction with the modification of the deconvolution method.

While this document contains many specifics, these should not be construed as limitations on the scope of the invention as defined in the appended claims, but rather as descriptions of features specific to particular embodiments of the invention.

**Claims**

1.  A system for obtaining force, the system comprising:

   a block (212) made of a photoelastic material having a plurality of surfaces including a first surface (208) on which an object (204) is exerting the force to the block (212); and
   three or more polariscopes (232), each comprising a light source (220), configured around the block (212) to measure photoelastic intensities;
   **characterised in that**:

   the block (212) includes a reflective coating along the first surface (208);
   the block (212) has a shape of substantially a polyhedron having six basal surfaces (228) in hexagonal arrangement to form three pairs of diagonally opposite basal surfaces;
   each of the three polariscopes (232) is configured for a pair of diagonally opposite basal surfaces (228);
   each light source (220) is configured to emit a ray of light (216) to enter the block (212) through and normal to one surface of the pair of surfaces (228), transmit through the block (212), reflect off the first surface (208) having the reflective coating, transmit back through the block (212), and exit the block (212) through and normal to the other surface of the pair of surfaces (228).

**2.** A method for obtaining force using a system as claimed in claim 1

measuring photoelastic intensities by using three polariscopes and obtaining each set of the photoelastic intensities sequentially in time to obtain a sequence of measured photoelastic intensities Jn; and

obtaining the force by using an optimization method, wherein three components of the force are obtained iteratively for each time step when a quantity associated with a difference between the measured photoelastic intensities $J$n and predicted photoelastic intensities $I$n becomes less than a predetermined threshold, wherein $J = (J_1, J_2, J_3)$ are the photoelastic intensities measured by the three polariscopes, respectively, $I = (I_1, I_2, I_3)$ are the predicted photoelastic intensities corresponding to $J = (J_1, J_2, J_3)$, and n = 1, 2, ... to N is an index representing the sequence of the time steps;

and the obtaining the force using the optimization method comprises obtaining the In for an input force by solving a forward problem, wherein photoelasticity equations are solved to predict the In for the input force in the forward problem solving.

**3.** The method of claim 2, wherein the obtaining the force using the optimization method comprises:

comparing the quantity associated with the difference between the predicted and measured photoelastic intensities $\|I$n - $J$n$\|$ against the predetermined threshold;

if the quantity is more than the predetermined threshold, obtaining a force gradient by solving an inverse problem and updating the input force to the input force plus the force gradient to repeat the obtaining the In and the comparing the quantity, wherein an adjoint formulation of the photoelasticity equations is used to obtain the force gradient for the given $\|I$n - $J$n$\|$ in the inverse problem solving;

if the quantity is less than the predetermined threshold, outputting the force as the force for the n-th index; and repeating the above steps until the index reaches N by using the force for the previous index as the input

**4.** The method of claim 2, wherein the object is stationary, and N = 1.

**Patentansprüche**

**1.** System zum Gewinnen von Kraft, wobei das System umfasst:

einen Block (212), der aus einem fotoelastischen Material hergestellt ist, das eine Vielzahl von Flächen hat, einschließlich einer ersten Fläche (208), auf die ein Objekt (204) die Kraft auf den Block (212) ausübt; und

drei oder mehr Polariskope (232), wobei jedes eine Lichtquelle (220) enthält;

die rund um den Block (212) eingerichtet ist, um fotoelastische Intensitäten zu messen;

**dadurch gekennzeichnet, dass**:

der Block (212) eine reflektierende Beschichtung entlang der ersten Fläche (208) aufweist;

der Block (212) eine Form von im Wesentlichen einem Polyeder hat, das sechs Grundflächen (228) in hexagonaler Anordnung hat, um drei Paare von diagonal gegenüberliegenden Grundflächen zu bilden;

jedes der drei Polariskope (232) für ein Paar von diagonal gegenüberliegenden Grundflächen (228) ausgelegt ist;

jede Lichtquelle (220) dafür ausgelegt ist, einen Lichtstrahl (216) zu emittieren zum Eintreten in den Block (212) durch und normal zu einer Fläche des Paares von Flächen (228), durch den Block (212) zu laufen, von der ersten Fläche (208) reflektiert zu werden, die die reflektierende Beschichtung hat, zurück durch den Block (212) zu laufen und den Block (212) durch die, und normal zu der, anderen Fläche des Paares von Flächen (228) zu verlassen.

**2.** Verfahren zum Gewinnen von Kraft unter Verwendung eines Systems nach Anspruch 1, wobei das Verfahren umfasst:

Messen von fotoelastischen Intensitäten durch Einsatz von drei Polariskopen und Gewinnen jedes Satzes der fotoelastischen Intensitäten zeitlich nacheinander, um eine Folge von gemessenen fotoelastische in Intensitäten $J$n zu erhalten; und

Gewinnen der Kraft durch Verwendung eines Optimierungsverfahrens, wobei drei Komponenten der Kraft iterativ für jeden Zeitschritt erhalten werden, wenn eine Größe, die mit einer Differenz zwischen den gemessenen fotoelastischen Intensitäten $J$n und vorhergesagten fotoelastischen Intensitäten $J$n verbunden ist, kleiner als ein vorgegebener Schwellwert wird,

wobei $J = (J_1, J_2, J_3)$ die fotoelastischen Intensitäten sind, die durch die drei Polariskope gemessen wurden; $I = (I_1, I_2, I_3)$ sind die vorhergesagten fotoelastischen Intensitäten, die $J = (J_1, J_2, J_3)$ entsprechen, und n = 1, 2, ... bis N ist ein Index, der die Folge der Zeitschritte repräsentiert;

das Gewinnen der Kraft unter Verwendung des Optimierungsverfahrens umfasst das Gewinnen der In für eine Eingabekraft durch Lösen eines vorwärtsgerichteten Problems, wobei Fotoelastizitätsgleichungen gelöst werden, um die In für die Eingabekraft in der Lösung des vorwärtsgerichteten Problems vorherzusagen.

**3.** Verfahren nach Anspruch 2, wobei das Gewinnen der Kraft unter Verwendung des Optimierungsverfahrens umfasst: Vergleichen der Größe, die mit der Differenz zwischen den vorhergesagten und gemessenen fotoelastischen Intensitäten $\|I n - J n\|$ verbunden ist, mit dem vorgegebenen Schwellwert;

wenn die Größe größer als der vorgegebene Schwellwert ist, Gewinnen eines Kraftgradienten durch Lösen eines inversen Problems und Aktualisieren der Eingabekraft zur Eingabekraft plus Kraftgradient, um das Gewinnen der $I$n zu wiederholen und die Größe zu vergleichen, wobei eine adjungierte Formulierung der fotoelastischen Gleichungen verwendet wird, um den Kraftgradienten für die gegebenen $\|I n - J n\|$ bei der Lösung des inversen Problems zu erhalten;

wenn die Größe kleiner als der vorgegebene Schwellwert ist, Ausgeben der Kraft als die Kraft für den n-ten Index; und Wiederholen der obigen Schritte, bis der Index N erreicht, unter Verwendung der Kraft für den vorherigen Index als Eingabe.

**4.** Verfahren nach Anspruch 2, wobei das Objekt stationär ist, und N = 1.

## Revendications

**1.** Système d'obtention d'une force, le système comprenant :

un bloc (212) composé d'un matériau photoélastique ayant une pluralité de surfaces comprenant une première surface (208) sur laquelle un objet (204) exerce la force sur le bloc (212) ; et

trois polariscopes ou plus (232), comprenant chacun une source de lumière (220), configurés autour du bloc (212) afin de mesurer les intensités photoélastiques ;

**caractérisé en ce que** :

le bloc (212) comprend un revêtement réfléchissant le long de la première surface (208) ;

le bloc (212) possède sensiblement une forme de polyèdre ayant six surfaces basales (228) agencées de manière hexagonale afin de former trois paires de surfaces basales diagonalement opposées ;

chacun des trois polariscopes (232) est configuré pour une paire de surfaces basales diagonalement opposées (228) ;

chaque source de lumière (220) est configurée pour émettre un rayon de lumière (216) afin qu'il pénètre dans le bloc (212) à travers et de manière normale par rapport à une surface de la paire de surfaces (228), qu'il soit transmis à travers le bloc (212), qu'il soit réfléchi par la première surface (208) ayant le revêtement réfléchissant, qu'il soit retransmis à travers le bloc (212), et qu'il quitte le bloc (212) à travers et de manière normale par rapport à l'autre surface de la paire de surfaces (228).

**2.** Procédé d'obtention d'une force à l'aide d'un système selon la revendication 1, le procédé comprenant :

la mesure des intensités photoélastiques à l'aide de trois polariscopes, et l'obtention de chaque groupe d'intensités photoélastiques chronologiquement dans le temps afin d'obtenir une séquence d'intensités photoélastiques mesurées $J$n ; et

l'obtention de la force à l'aide d'un procédé d'optimisation, dans lequel trois composantes de la force sont obtenues de manière itérative pour chaque moment lorsqu'une quantité associée à une différence entre les intensités photoélastiques mesurées $J$n et les intensités photoélastiques prédites $I$n devient inférieure à un seuil prédéterminé,

dans lequel $J = (J_1, J_2, J_3)$ sont les intensités photoélastiques mesurées par les trois polariscopes, respectivement, $I = (I_1, I_2, I_3)$ sont les intensités photoélastiques prédites qui correspondent à $J = (J_1, J_2, J_3)$, et n = 1,2,... à N est un indice qui représente la séquence des moments ;

et

l'obtention de la force à l'aide du procédé d'optimisation comprend l'obtention de In pour une force d'entrée en résolvant un problème, dans lequel les équations de photoélasticité sont résolues afin de prédire In pour la force d'entrée lors de la résolution du problème.

3. Procédé selon la revendication 2, dans lequel l'obtention de la force à l'aide du procédé d'optimisation comprend :

la comparaison de la quantité associée à la différence entre les intensités photoélastiques prédites et mesurées $\|I_n\text{-}J_n\|$ avec le seuil prédéterminé ;
si la quantité est supérieure au seuil prédéterminé, l'obtention d'un gradient de force en résolvant un problème inverse et en mettant à jour la force d'entrée selon la force d'entrée plus le gradient de force afin de répéter l'obtention de $I_n$ et la comparaison de la quantité, dans lequel une formulation adjointe des équations de photoélasticité est utilisée pour obtenir le gradient de force pour le $\|I_n\text{-}J_n\|$ donné lors de la résolution du problème inverse ;
si la quantité est inférieure au seuil prédéterminé, la délivrance de la force en tant que force pour le $n^{\text{ième}}$ indice ; et
la répétition des étapes ci-dessus jusqu'à ce que l'indice atteigne N en utilisant la force pour l'indice précédent comme entrée.

4. Procédé selon la revendication 2, dans lequel l'objet est stationnaire, et N = 1.

[Fig. 1A]

[Fig. 1B]

[Fig. 2]

[Fig. 3]

**304**
Start:
frame $n = 1$, guess $f_n = 0$

**328**
Increment frame:
$n \rightarrow n + 1, f_n = f_{n-1}$

**308**
Solve forward problem:
given $f_n$, predict $I_n$

**320**
Update guess:
$f_n \rightarrow f_n + \delta f_n$

**324**
Last frame?
$n = N$ ?

No

**312**
Check convergence:
$\| I_n - J_n \| < \theta$ ?

Yes

Yes

No

**332**
Stop

**316**
Solve inverse problem:
given $I_n - J_n$, calculate $\delta f_n$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3966326 A
- US 5298964 A
- US 3950987 A

### Non-patent literature cited in the description

- **MICHAEL B. GILES et al.** An introduction to the adjoint approach to design. Oxford University Computing Laboratory, Numerical Analysis Group, 2000
- **LEON AINOLA et al.** On the generalized Wertheim law in integrated photoelasticity. *J. Opt. Soc. Am. A,* 2008, vol. 25 (8), 1843-1849
- **M. ARCAN et al.** A fundamental characteristic of the human body and foot, the foot-ground pressure pattern. *J. Biomechanics,* 1976, vol. 9, 453-457
- **HEATHER DRISCOLL et al.** The use of photoelasticity to identify surface shear stresses during running. *Procedia Engineering,* 2010, vol. 2, 3047-3052
- **VENKETESH N. DUBEY et al.** Load estimation from photoelastic fringe patterns under combined normal and shear forces. *Journal of Physics, Conference Series,* 2009, vol. 181, 1-8
- **BRIAN L. DAVIS et al.** A device for simultaneous measurement of pressure and shear force distribution on the planar surface of the foot. *Journal of Applied Biomechanics,* 1998, vol. 14, 93-104
- **RICARDO E. SAAD et al.** Distributed-force Recovery for a planar photoelastic tactile sensor. *IEEE Transactions on Instrumentation and Measurement,* 1996, vol. 45 (2), 541-546
- **TAKU NAKAMURA et al.** *Journal of Robotics and Mechatronics,* 2013, vol. 25 (2), 355-363
- **J. COBB et al.** Transducers for foot pressure measurement: survey of recent developments. *Med. & Biol. Eng. & Comput.,* 1995, vol. 33, 525-532
- **VENKETESH N. DUBEY et al.** Extraction of load information from photoelastic images using neural networks. *Proceedings of IDETC/CIE 2006,* 2006
- **VENKETESH N. DUBEY et al.** Photoelastic stress analysis under unconventional loading. *Proceedings of IDETC/CIE 2007,* 2007
- **ANTHONY RHODES et al.** High resolution analysis of ground foot reaction forces. *Foot & Ankle,* 1988, vol. 9 (3), 135-138
- **IAN J. ALEXANDER et al.** The assessment of dynamic foot-to-ground contact forces and plantar pressure distribution: A review of the evolution of current techniques and clinical applications. *Foot & Ankle,* 1990, vol. 11 (3), 152-167
- **YOSHIKI NISHIZAWA et al.** Contact pressure distribution features in Down syndrome infants in supine and prone positions, analyzed by photoelastic methods. *Pediatrics International,* 2006, vol. 48, 484-488